Europäisches Patentamt

European Patent Office

Office européen des brevets

(11) Veröffentlichungsnummer: **0 386 645**
**A1**

## EUROPÄISCHE PATENTANMELDUNG

(21) Anmeldenummer: 90104056.8

(51) Int. Cl.⁵: **F16H 55/18**

(22) Anmeldetag: 02.03.90

(30) Priorität: 06.03.89 DE 3907127
02.02.90 DE 4003042

(43) Veröffentlichungstag der Anmeldung:
**12.09.90 Patentblatt 90/37**

(84) Benannte Vertragsstaaten:
**AT BE CH DE FR GB LI NL**

(71) Anmelder: **Kosch, Erhard**
**Blumenweg 1**
**D-3007 Gehrden 1(DE)**

(72) Erfinder: **Kosch, Erhard**
**Blumenweg 1**
**D-3007 Gehrden 1(DE)**

(74) Vertreter: **Thömen, Uwe, Dipl.-Ing.**
**Patentanwalt U. Thömen Zeppelinstrasse 5**
**D-3000 Hannover 1(DE)**

(54) **Spielfreier Zahnradantrieb.**

(57) Es wird ein spielfreier Zahnradantrieb beschrieben, der ein antreibendes Zahnrad (10) und ein angetriebenes Zahnrad (12) umfaßt.

Zusätzlich sind wenigstens zwei Ausgleichszahnräder (14,16) vorgesehen, deren Achsen (20,22) gemeinsam mit der Achse (18) des antreibenden Zahnrades eine zweischenklige Gruppierung (24) bilden, die scherenartig spreizbar ist. Die im Schnittpunkt (26) der zweischenkligen Gruppierung liegende Achse (18) wird mit einer in Richtung auf das angetriebene Zahnrad (12) (oder in Gegenrichtung) weisenden Kraft beaufschlagt, wobei der Achsabstand zwischen den ineinandergreifenden Zahnrädern konstant gehalten wird.

Fig. 1

EP 0 386 645 A1

Die Erfindung betrifft einen spielfreien Zahnradantrieb nach dem Oberbegriff des Anspruchs 1.

Zur Positionierung von Schlitten, Supporten, Fahrtischen oder Werkzeugen bei Werkzeugmaschinen aber auch in anderen Bereichen, wie z.B. zur Positionierung von Antennen bei Satelliten, Optiken bei Planetarien und ähnlichen Präzisionswerkzeugen werden spielfreie Antriebe benötigt.

Bekannt sind beispielsweise Spindeln, die jedoch nur bei relativ kurzen Verfahrwegen in Betracht kommen.

Bei längeren Verfahrwegen und bei höheren Geschwindigkeiten der Bewegung werden Zahnstangengetriebe verwendet, die eine Zahnstange mit darauf abrollenden Zahnrädern umfassen. Man kann durch sehr genaue Fertigung der Zähne erreichen, daß das Zahnflankenspiel gering wird. Dieses System ist mehrfach überbestimmt und damit bei Bewegung nicht frei von Impulsen. Dieses ursprünglich einmal erreichte Zahnflankenspiel vergrößert sich aber mit der Zeit durch Verschleiß. Ein durch Verschleiß eingetretenes Zahnflankenspiel kann jedoch nicht beliebig oft durch weiteres Ineinanderschieben von Zahnstange und Zahnrad ausgeglichen werden, weil durch das dann auftretende Zahnklemmen das korrekte Abrollen z.B. der Evolventenverzahnung gestört wird.

Durch die Verwendung von zwei parallelen Getrieben, die von einem gemeinsamen Motor angetrieben werden, deren Abtriebszahnräder aber beide in die gleiche Zahnstange eingreifen und die so gegeneinander verspannt werden, daß alles Zahnspiel ausgeglichen wird, erreicht man zwar einen spielfreien Zahneingriff, der auch bei späterem Verschleiß nochmals nachgestellt werden kann. Diese bekannte Problemlösung wird dennoch nur in Ausnahmefällen angewendet, weil sie sehr teuer ist. Bei schnell beschleunigtem Antrieben stört auch das sehr hohe Trägheitsmoment dieser Lösung.

Aus der DE-PS 29 10 373 und der DE-OS 30 05 862 sind außerdem spielfrei Zahnradantriebe bekannt, bei welchen ein antreibendes Zahnrad mit einer angetriebenen Zahnstange indirekt über einen Zahnriemen gekoppelt ist. Der Zahnriemen wird dabei zu beiden Seiten des antreibenden Zahnrades auf Zug belastet und legt sich somit rechts von dem Zahnrad an die linken Zahnflanken und links von dem Zahnrad an die rechten Zahnflanken an. Somit ist in beiden Bewegungsrichtungen das Spiel gleich Null.

Allerdings besteht bei der Verwendung von Zahnriemen ein genereller Nachteil. Zum einen besitzt der Zahnriemen eine Elastizität, die größer ist als die des Zahnrades. Dieser Umstand bedeutet praktisch die Verursachung eines künstlichen Spiels, denn wenn das eine Teil weniger elastisch als der andere Teil ist, ergibt sich bei Richtungsänderungen oder auch bei Beginn der Bewegung eine durch Dehnung des elastischen Teils verursachte Relativverschiebung.

Ein weiterer Nachteil der Verwendung von Zahnriemen besteht darin, daß diese beispielsweise dann nicht einsetzbar sind, wenn Funkenflug, Schweißperlen oder andere Umgebungseinflüsse vorhanden sind, die den Riemen zerstören können. Außerdem verursachen die Zahnriemen einen Polygon-Effekt, also eine pulsierende Drehbewegung.

Ferner ist die Zuverlässigkeit eingeschränkt, da der Riemen einer Materialermüdung unterliegt und darüberhinaus keine extrem großen Kräfte übernehmen kann.

Der Erfindung liegt die Aufgabe zu Grunde, einen robusten und einfach zu fertigenden, präzisen und spielfreien Zahnradantrieb zu schaffen, dessen Zahnflankenspiel sich ohne die Verwendung von ineinandergreifenden Zahnrädern mit einer spielfreien Verzahnung selbsttätig stets auf Null stellt.

Die mehrfache Überbestimmtheit des normalen spielfreien Zahnradtriebes soll zur Vermeidung pulsierender Bewegungsübertragung vermieden werden. Außerdem soll die Überbestimmtheit zwischen Zahnstange und Linearlagerung eines zu bewegenden Tisches beseitigt werden. Diese Aufgabe wird bei einem spielfreien Zahnradantrieb nach dem Oberbegriff des Anspruchs 1 durch die im kennzeichnenden Teil angegebenen Merkmale gelöst.

Die bei der Erfindung angewandte Maßnahme, ein Zahnflankenspiel zu vermeiden, besteht darin, übliche Zahnräder in einer beispielsweise zweischenkligen Gruppierung anzuordnen. Wird auf die Achse des mittleren Zahnrades eine Kraft ausgeübt, so spreizen sich die anderen Zahnräder scherenartig auseinander und legen sich an die jeweils entgegengesetzten Zahnflanken des angetriebenen Zahnrades an. Dies gilt für alle Zahneingriffsstellen aller Zahnräder. Welches Zahnrad der Gruppierung das antreibende Zahnrad ist und welches die Ausgleichszahnräder sind, ist für das Wirkungsprinzip der Erfindung nicht bedeutend.

Das Zahnflankenspiel kann übrigens nicht nur durch eine Druckkraft sondern auch durch Zugkraft aus dem System entfernt werden. Die gewünschte Spielfreiheit läßt sich also auch durch Einwirkung einer Zugkraft auf die im Schnittpunkt der Gruppierung liegende Achse erzielen. Wird auf die Achse des mittleren Zahnrades eine Zugkraft ausgeübt, so spreizen sich dann die anderen Zahnräder nicht scherenartig auseinander, sondern in entgegengesetzter Richtung zueinander.

Die nachfolgenden Erläuterungen und auch die Beschreibung der Ausführungsbeispiele betreffen der Einfachheit halber den Fall einer Druckkraft, ohne daß dies eine Einschränkung der Erfindung bedeutet, die auch den erwähnten Fall einer Zugkraft mit umfaßt. Die belasteten und unbelasteten ineinandergreifenden Zahnflanken sind dann nur vertauscht.

An den jeweiligen einzelnen Zahneingriffsstellen wird bewußt ein Spiel in Bezug auf die Einzelzahnräder zugelassen. Dieses Spiel ist jedoch für jedes Zahnrad an seinen Eingriffsstellen gegenläufig, so daß das Gesamtsystem insgesamt völlig spielfrei ist, und zwar für beide Bewegungsrichtungen.

Durch Konstanthalten des Achsabstandes wird die Eindringtiefe der Zahnräder ineinander konstant gehalten. Dadurch wird verhindert, daß sich im Zuge fortschreitenden Verschleißes die Achsabstände der einander berührenden Zahnräder vermindern, was regelmäßig zu einem Klemmen der Zähne in den Zahnlücken beim Abrollen führt und sich in ruckartigen Bewegungen beim Abwälzen der Zahnflanken äußert. Dann würden sich nämlich alle Zahnflankenpaare spielfrei berühren, was zu einer pulsartigen Bewegungsübertragung führt. Diese Impulse hätten außerdem zur Folge, daß sich beispielsweise auf einem durch eine Werkzeugmaschine hergestellten Werkstück Rattermarken abzeichnen.

Bei gleichzeitiger Nutzung dieser Zahnrad-Laufscheiben- Laufschienen-Gruppierung als Lagerung eines linear bewegten Tischs ist das Problem der Parallelität zwischen Linear-Lagerung und Zahnstange beseitigt.

Vorzugsweise liegt die Achse des antreibenden Zahnrades im Schnittpunkt der zweischenkligen Gruppierung.

Hierdurch wird beim Antrieb die Symmetrie der Gruppierung ausgenutzt, was zu einer in beiden Richtungen gleichen Belastung und Verformung der Zahnflanken führt.

Die Konstanthaltung des Achsabstandes kann in praktischer Ausgestaltung der Erfindung auf mehrere Arten realisiert werden. Eine erste Alternative sieht vor, daß wenigstens ein Teil der ineinandergreifenden Zahnräder mit ihren Achsen in Lagerbügeln gelagert ist. Bei einer zweiten Alternative weisen wenigstens ein Teil der ineinandergreifenden Zahnräder zusätzliche Laufscheiben auf, die aufeinander abrollen. In einer dritten Alternative sind die Ausgleichszahnräder beider Richtungen drehbar, aber mit festem Achsabstand in einem bewegten Maschinenteil gelagert.

Während die erste Alternative gleichzeitig die starre Lagerung der Zahnräder der Gruppierung ermöglicht, gestattet die zweite Alternative die lose Lagerung der Zahnräder aufeinander, was besonders bei Antrieben mit einer Zahnstange als angetriebenem Zahnrad mit unendlichem Radius zweckmäßig ist.

Bei der dritten Alternative wird die vom Antriebsmotor verursachte Bewegung direkt von dem angetriebenen Zahnrad (Zahnstange) über die beiden Ausgleichszahnräder auf das bewegte Maschinenteil, beispielsweise ein Wagen, übertragen. Dadurch erreichen die Zahnkräfte ein Minimum. Zusätzlich wird die Lagerung der Achse des antreibenden Zahnrades von den linearen Antriebskräften für den Wagen entlastet.

Bei einer besonders vorteilhaften Ausgestaltung weisen die Laufscheiben den gleichen Radius wie der Teilkreisradius der zugeordneten Zahnräder auf.

Dadurch wird unabhängig von dem jeweiligen Verschleißzustand und der Gewichtsbelastung der ineinandergreifenden Zahnräder das Abrollen auf den Teilkreisen der Zahnräder erreicht. Dies ermöglicht unter Ausnutzung einer vorgegeben Verzahnungsgeometrie das optimale ruckfreie und spielfreie Abwälzen der Zahnflanken auch bei wechselnder Drehrichtung.

Das angetriebene Zahnrad kann alternativ mit einer Innen-oder auch mit einer Außenverzahnung ausgestattet sein. In allen Fällen kommt ein einwandfreier Eingriff der Zahnflanken zustande. Darüberhinaus ist es auch möglich, die Zuordnung des antreibenden und des angetriebenen Zahnrades zu vertauschen.

Eine andere Ausgestaltung der Erfindung sieht vor, daß die Laufscheiben als Kugellager mit vorzugsweise balligem Außenring ausgebildet sind.

Bei dieser Lösung können auch Abweichungen des Abrollradius vom exakten Teilkreisradius realisiert werden. Dies kann z.B. bei einer anderen Verzahnungsgeometrie von Vorteil sein. Die hierbei auftretende Relativbewegung der abrollenden Flächen wird dann durch das Kugellager ausgeglichen.

Bei einem Linearantrieb wird zweckmäßig das angetriebene Zahnrad als Zahnstange ausgebildet.

Das Antriebsprinzip wird auch bei dieser Ausgestaltung beibehalten, da die Zahnstange als Zahnrad mit unendlichen Radius betrachtet und behandelt werden kann.

In Anlehnung an ein angetriebenes Zahnrad mit unendlichem Radius wird bei der Zahnstange die Laufscheibe als Laufschiene ausgebildet.

Hierdurch ist wieder analog zum angetriebenen Zahnrad endlichen Durchmessers gewährleistet, daß auch die in die Zahnstange eingreifenden Zahnräder stets in gleicher Weise mit ihren Zahnflanken an den Zahnflanken der Zahnstange abwälzen. Der damit verbundene ruckfreie und spielfreie Antrieb läßt sich also auch hier nutzen.

Bei einer praktischen Ausgestaltung ist die Laufschiene niveaugleich mit der Teilungsebene der Zahnstange angeordnet.

Dadurch wird unabhängig von dem jeweiligen Verschleißzustand und der Gewichtsbelastung der ineinandergreifenden Zahnräder das Abrollen der Teilkreise der Zahnräder endlichen Radius auf dem entsprechenden Teilkreis der Zahnstange, wegen dessen unendlichen Radius zutreffender als Teilungsebene bezeichnet, erreicht.

Selbst bei "wellenförmiger" Zahnstange mit einer dieser Form folgenden Teilungsebene ist dann immer dafür gesorgt, daß die Bewegung auf dem Teilkreis erfolgt.

Eine praktische Ausführungsform der Erfindung sieht vor, daß die Lagerbügel ein gemeinsames Schwenkgelenk besitzen, in dem auch die Achse des antreibenden oder angetriebenen Zahnrades endlichen Durchmessers gelagert ist, und daß an den Enden der Lagerbügel die Achsen der beiden Ausgleichszahnräder gelagert sind.

Diese Ausführung vereinigt in einer einfachen konstruktiven Form die Lagerung der Achsen der Gruppierung aus dem antreibenden Zahnrad mit den Ausgleichszahnrädern die Einhaltung konstanter Achsabstände sowie die scherenartige Spreizung der an den Enden der Lagerbügel angeordneten Zahnräder bei Kraftbeaufschlagung der mittleren Achse.

Bei einer Weiterbildung schließen die Lagerbügel im gemeinsamen Schwenkgelenk einen Winkel ein, der je nach den konstruktiven Erfordernissen verzahnungsbedingt frei gewählt werden kann.

Hierdurch ergibt sich eine Übersetzung der in Richtung auf das angetriebene Zahnrad eingeleiteten Kraft, die durch die Spreizung der Lagerbügel auf die Zahnflanken zur Erzeugung der spielfreien Anlage der Zahnflanken umgelenkt wird. Durch die Verringerung der einzuleitenden Kraft wird die Wälzarbeit der Zahnräder verringert.

Die in Richtung auf das angetriebene Zahnrad eingeleitete Kraft kann dadurch aufgebracht werden, daß die Achse des antreibenden Zahnrades durch Federkraft oder Gravitationskraft mit Kraft beaufschlagt ist.

Die erste Alternative bietet sich bei einem Zahnradantrieb an, bei dem alle Zahnräder einen endlichen Durchmesser aufweisen oder bei einem durch eine Zahnstange zu bewegenden Wagen, der mit seinem Eigengewicht auf der Laufschiene der Zahnstange lagert.

Die zweite Alternative in Verbindung mit einem durch einen Zahnstangentrieb zu bewegenden Wagen ermöglicht es, den Wagen unmittelbar auf der Achse des mittleren Zahnrades zu lagern. Hierdurch wird gleichzeitig die Parallelität zwischen Zahnstange und Linear-Lagerung bestmöglich gewährleistet. Die beim normalen Zahnstangentrieb hier vorhandene Überbestimmtheit ist aufgehoben.

Vorzugsweise ist die Federkraft mittels einer Einstellvorrichtung einstellbar.

Auf diese Weise läßt sich die aufzubringende Kraft auf den unteren Wert beschränken, der ein Ausheben unter extremer Beschleunigung gerade noch verhindert. Außerdem kann der Andruck der Zahnflanken bei fortschreitendem Verschleiß angepaßt werden. Dieser Sachverhalt ermöglicht es, Zahnräder zu verwenden, die schon im Einbauzustand Flankenspiel haben, also billiger sind. Der erfindungsgemäße Zahnradantrieb sieht schon im Neuzustand Zahnräder mit Flankenspiel vor. Dieses Flankenspiel kann auch durch geringfügiges Vergrößern z.B. einer Teilkreisschreibe hergestellt werden. Diese geringe Störung der Verzahnungsgeometrie bewirkt keine zusätzlichen Drehimpulse.

Bei einer Weiterbildung ist eine auf der dem angetriebenen Zahnrad abgewandten Seite des antreibenden Zahnrades liegende Abstützlaufschiene vorgesehen, gegen die sich vorzugsweise die Laufscheibe des mittleren Zahnrades abstützt. Aber auch die Abstützung eines Kugellagers das auf der Achse des antreibenden Zahnrades angebracht ist, bewirkt den gleichen Effekt.

Bei dieser Lösung ergibt sich ein sehr starres System, das mit einer sehr geringen Vorspannkraft auskommt. Ein Ausheben der Zahnräder wird dennoch verhindert, da der Aushebeweg durch die Abstützlaufschiene zwangsläufig begrenzt, nämlich gleich Null ist.

Weiterbildungen und vorteilhafte Ausgestaltungen der Erfindung ergeben sich aus den Ansprüchen in Verbindung mit der Zeichnung und der weiteren Beschreibung.

In der Zeichnung zeigen:

Fig. 1 einen Längsschnitt durch einen spielfreien Zahnradantrieb mit einer Zahnstange nach der Erfindung,

Fig. 2 eine vereinfachte Darstellung gemäß Fig. 1, jedoch mit eingezeichneten Zähnen der Zahnräder,

Fig. 3 eine schematische Querschnittsansicht zur Verdeutlichung des Eingriffes der Zähne zweier Zahnräder bei einem insgesamt spielfreien Zahnradantrieb,

Fig. 4 einen anderen Querschnitt durch zwei ineinandergreifende Zahnräder,

Fig. 5 einen Längsschnitt durch eine Einstellvorrichtung, und

Fig. 6 eine weitere Darstellung einer besonders bevorzugten Ausführungsform der Erfindung in Abwandlung nach Fig. 1.

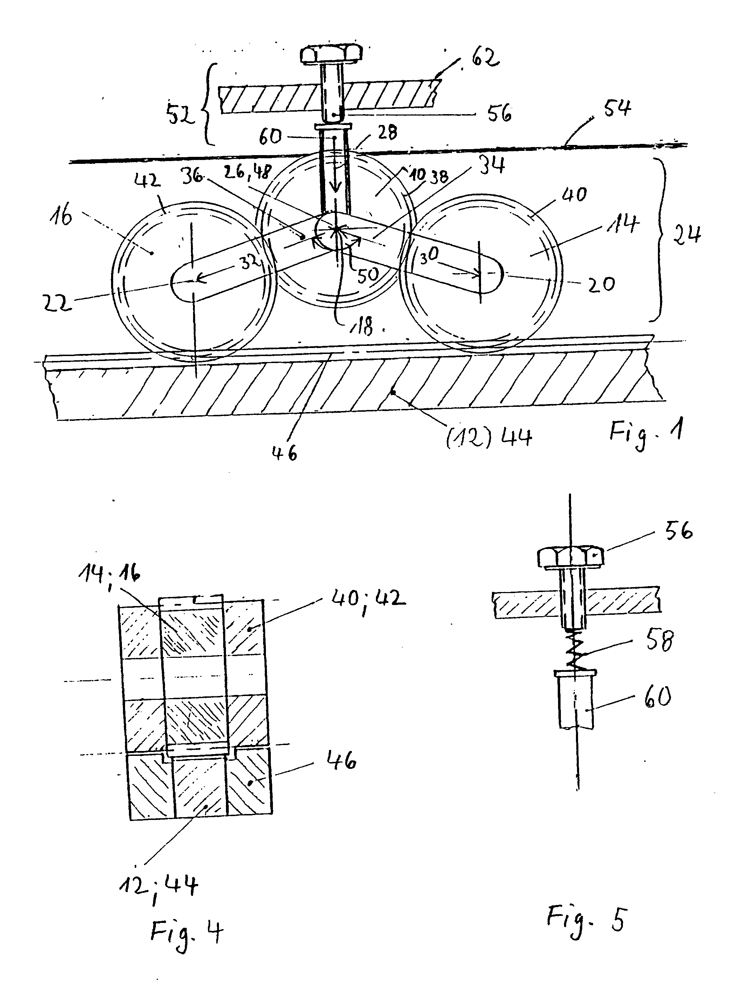

Fig. 1 zeigt einen Längsschnitt durch einen spielfreien Zahnradantrieb. Das antreibende, z.B. mit einem hier nicht dargestellten Getriebemotor verbundene Zahnrad, ist hier mit 10, das angetriebene Zahnrad mit 12 bezeichnet. Bei dieser Ausgestaltung ist das angetriebene Zahnrad 12 als Zahnstange 44 ausgebildet. Eine solche Zahnstange 44 kann als Zahnrad mit unendlichem Radius betrachtet und behandelt werden.

Das antreibende Zahnrad 10 greift in die Zahnstange 44 nicht direkt, sondern über zwei Ausgleichsszahnräder 14 und 16 ein, die zu beiden Seiten einer durch die Achse 18 des antreibenden Zahnrades 10 verlaufenden Senkrechten angeordnet sind.

Die beiden Ausgleichsszahnräder 14 und 16 sind mit ihren Achsen 20 und 22 in Lagerbügeln 34 und 36 gelagert und befinden sich an den jeweiligen äußeren Enden der Lagerbügel 34 und 36. Die Lagerbügel 34 und 36 sind untereinander durch ein Schwenkgelenk 48 verbunden, das auch gleichzeitig den Aufnahmeort für die Achse 18 des antreibenden Zahnrades 10 bildet.

Allgemein stellen das antreibende Zahnrad 10 mit den beiden Ausgleichsszahnräder 14 und 16 eine zweischenklige Gruppierung 24 dar, die um ihrem Schnittpunkt 26 schwenkbar und scherenartig spreizbar ist, wenn auf die Achse 18 eine in Richtung der Zahnstange 44 weisende Kraft 28 ausgeübt wird. Die auseinandergedrückten Ausgleichsszahnräder 14 und 16 legen sich dann mit ihren Zahnflanken an die beiden Seiten der Zahnflanken eines angetriebenen Zahnrades 12 an und beseitigen so das Zahnflankenspiel. Da zwischen der jeweils unbelasteten Zahnflanke der Ausgleichsräder 14 bzw. 16 und der Zahnstangenflanke ein Spiel entsteht, ist ein Klemmen - und damit ein Pulsieren - der Bewegung ausgeschlossen. Der gleiche Sachverhalt liegt zwischen Rad 10 und den Ausgleichsrädern 14 und 16 vor.

Durch die Lagerbügel 34 und 36 wird ein konstanter Achsabstand 30 und 32 der ineinandergreifenden Zahnräder 10 und 14 einerseits sowie 10 und 16 andererseits erreicht. Dadurch können die Verzahnungen auf den Teilungsebenen ablaufen, so daß unabhängig von allen anderen Einflüssen die Verzahnungsgeometrie sicher eingehalten wird.

Um auch einen konstanten Abstand der Ausgleichsszahnräder 14 und 16 gegenüber der Zahnstange 44 einhalten zu können, sind die Ausgleichsszahnräder 14 und 16 mit zusätzlichen Laufscheiben 40 und 42 versehen. Der Radius dieser Laufscheiben 40 und 42 ist gleich dem Teilkreisradius der zugeordneten Zahnräder 14 und 16. Die Zahnstange 44 ist mit einer Laufschiene 46 versehen, die niveaugleich mit der Teilungsebene der Zahnstange 44 liegt.

In der schematischen Darstellung gemäß Fig. 2 sind die Laufscheiben 38, 40 und 42 im Sinne einer besseren Übersichtlichkeit nicht dargestellt. Fig. 2 zeigt jedoch die genannten Teilkreise 64 der Zahnräder 10, 16 und 14 sowie die Teilebene 72 der Zahnstange 44, die als Zahnrad mit unendlichem Radius ausgefaßt werden kann.

Die Anordnung der Laufscheiben 40 oder 42 sowie der Laufschiene 46 ergibt sich aus Fig. 4, die einen Querschnitt durch zwei Zahnräder 14 oder 16 und ein Zahnrad 12 oder die Zahnstange 44 zeigt. Die Laufscheiben 40 oder 42 sowie die Laufschiene 46 sind hierbei doppelt vorhanden und zwar sind sie zu beiden Seiten der Verzahnungen angeordnet.

Während die Ausgleichszahnräder 14 und 16 mit der Zahnstange 44 in Eingriff stehen, können die Verzahnungen wegen der Laufscheiben 40 oder 42 und der Laufschiene 46 stets nur genau mit den Teilungsebenen aufeinander abrollen.

Wird nun der gesamte Zahnradantrieb, bestehend aus den Zahnrädern 10, 14, 16 und der Zahnstange 44 mit der Kraft 28 beaufschlagt, so wird das Zahnflankenspiel an allen Eingriffsstellen auf Null reduziert werden. Die Ausgleichszahnräder 14 und 16 liegen dann jeweils mit einer Zahnflanke an und zwar liegt das Zahnrad 14 an einer rechten Zahnflanke der Zahnstange 44 an, während gleichzeitig das Zahnrad 16 an einer linken Zahnflanke der Zahnstange 44 anliegt.

In den Eingriffsstellen zwischen den Zahnrädern 10 und 14 sowie zwischen den Zahnrädern 10 und 16 bestehen die gleichen Zahnflanken-Anlageverhältnisse wie zwischen der Zahnstange 44 und den Zahnrädern 14 und 16 Dadurch ist, korrekte Verzahnung vorausgesetzt, ein pulsfreies Abrollen der Zahnräder 10, 14, 16 aufeinander und der Zahnräder 14 und 16 auf der Zahnstange 44 jederzeit ohne Zahnflankenspiel bestmöglichst gewährleistet. Diese Eigenschaft ist bei Antrieben für Koordinatentische, auf denen z.B. irgendwelche Konturen frei von Rattermustern ausgefräst oder ausgelasert werden sollen, von großer Wichtigkeit.

Die Zahnflanken-Anlageverhältnisse ergeben sich besonders deutlich aus Fig. 3, welches in teilweiser Darstellung den Eingriff des Zahnrades 16 in die Zahnstange 44 zeigt. Wie zu erkennen ist, liegen jeweils die belasteten Zahnflankenpaare 66 spielfrei aneinander an, während die anderen unbelasteten Zahnflankenpaare 68 ein Spiel aufweisen. Bei dem anderen Zahnrad 14 sind die Verhältnisse entsprechend, nur liegen dort dann die gegenläufigen belasteten Zahnflankenpaare spielfrei aneinander an, so daß das Gesamtsystem insgesamt spielfrei ist, und zwar in beiden Bewegungsrichtungen.

Wie Fig. 1 weiter zeigt, schließen die Lagerbügel 34 und 36 im gemeinsamen Schwenkgelenk 48 einen Winkel 50 ein. Hierdurch ergibt sich eine Übersetzung der in Richtung auf das angetriebene Zahnrad eingeleiteten Kraft 28, die durch die Spreizung der Lagerbügel 34 und 36 auf die Zahnflanken zur Erzeugung der spielfreien Anlage der Zahnflanken umgelenkt wird. Durch Veränderung dieses Winkels können die Kräfteverhältnisse der jeweiligen konstruktiven Notwendigkeiten angepaßt werden.

Die in Richtung auf die Zahnstange 44 eingeleiteten Kraft 28 wird im Ausführungsbeispiel durch eine Einstellvorrichtung 52 aufgebracht. Diese Einstellvorrichtung 52 kann gemäß Fig. 3 aus einer Stellschraube 56 mit einer Druckfeder 58 bestehen. Mit der Druckfeder 58 kann sichergestellt werden, daß bei merklichen Verzahnungsfehlern, z.B. unrunden Zahnrädern, eine Druckstange 60 und damit alle Zahneingriffsstellen, spielfrei und gegebenenfalls unter Vorspannung bleiben, ohne daß dadurch die Zahneingriffsgeometrie gestört wird.

Hierdurch werden nicht nur kleine Verzahnungsfehler ausgeglichen ohne daß dadurch periodisches Zahnflankenspiel auftritt, es wird auch gleichzeitig eine Überlastung der Verzahnung durch überhöhte Vorspannung als Folge einer durch die Stellschraube 56 begrenzten Bewegung der Druckstange 60, verursacht z.B. durch einen Verzahnungsfehler, vermieden.

Wahlweise kann durch weiteres Anziehen der Stellschraube 56 auch eine definierte Vorspannung auf alle Zahneingriffsstellen gelegt werden, so daß die bei Koordinatenverfahrmaschinen erstrebte Steifigkeit des Antriebes den Erfordernissen in einfacher Weise angepaßt werden kann, ohne daß dadurch eine Störung der Verzahnungsgeometrie zu befürchten ist

Alternativ kann die Achse 22 des antreibenden Zahnrades 10 auch durch Gravitationskraft mit Kraft 28 beaufschlagt werden. Diese Alternative in Verbindung mit einem über eine ortsfeste Zahnstange 44 zu bewegenden Wagen 62 ermöglicht es, den Wagen 62 unmittelbar auf der Achse 18 des mittleren Zahnrades 10 zu lagern. Hierdurch kann die sonst erforderliche Linear-Lagerung des Wagens 62 wegfallen. Die Überbestimmtheit zwischen Zahnstange und Linear-Lagerung des Wagens 62 wird damit vermieden.

Bei einer anderen Alternative ist eine auf der Zahnstange 44 abgewandten Seite des antreibenden Zahnrades 10 liegende Abstützlaufschiene 54 vorgesehen, gegen die sich eine Laufscheibe 38 des mittleren Zahnrades 10 abstützt. Diese Abstützung kann auch durch ein nicht dargestelltes Kugellager erfolgen, welches größer oder kleiner als die Laufscheibe ist.

Bei dieser Lösung ergibt sich ein starres System, das mit einer sehr geringen Vorspannkraft auskommt. Ein Ausheben der Zahnräder 10, 14 oder 16 wird dennoch verhindert, da der Aushebeweg durch die Abstützlaufschiene 54 zwangsläufig auf Null begrenzt ist.

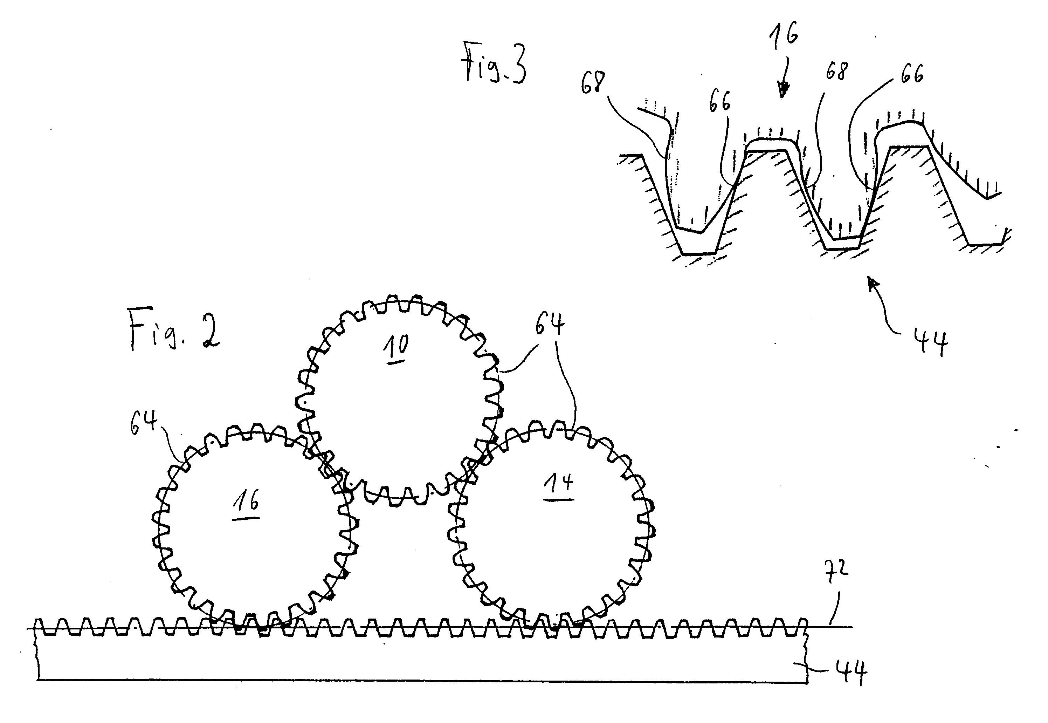

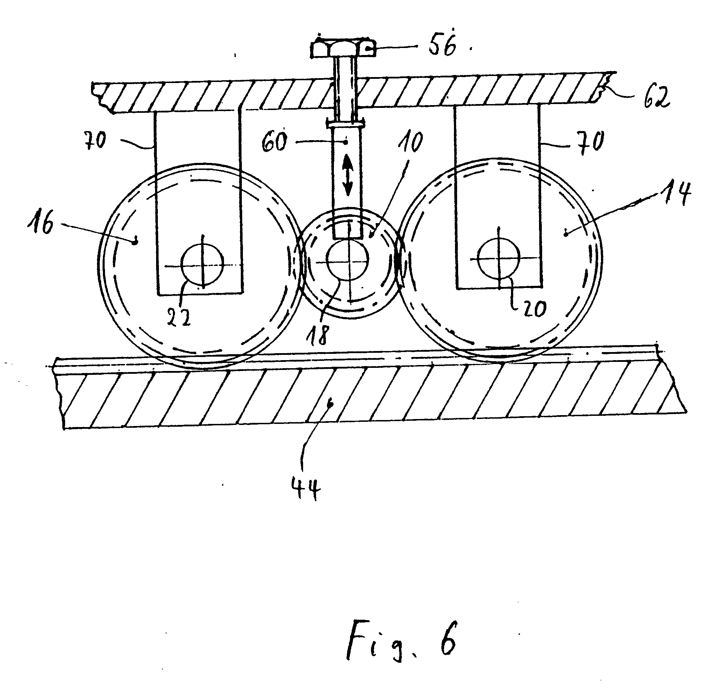

Bei einer besonders bevorzugten Ausgestaltung des Zahnradantriebes gemäß Fig. 6 ist der zu bewegende Wagen 62 oder dergleichen (z.B. ein Koordinatentisch) fest mit den Achsen 20, 22 der beiden Ausgleichszahnräder 14, 16 über zugeordnete Träger 70 verbunden. Durch diese Art der festen Verbindung werden die Achsabstände auf einen konstanten Wert festgelegt.

Bei dieser Lösung wird ferner die von den Ausgleichszahnrädern 14 und 16 ausgehende Antriebskraft vom mittleren Zahnrad 10 jeweils direkt auf den zu bewegenden Wagen 62 übertragen (die Zahnstange 44 ist ortsfest angeordnet) . Der Umweg über die Lagerung des antreibenden Zahnrades 10 (vgl. Fig. 1) wird somit vermieden.

Der in Fig. 1 gezeigte Winkel 50 erreicht bei der Ausführungsform gemäß Fig. 6 einen Wert von 180°, so daß der Abstand der Achsen 20, 22 zwischen den beiden Ausgleichszahnrädern 14 und 16 seinen größten Wert einnimmt. Dies ist bei Nutzung der Teilkreisscheiben als Linear-Lagerung für den Tisch 62 sinnvoll.

Bei der in Fig. 6 dargestellten Ausführungsform muß das Zahnrad 10 übrigens kleiner sein als die Ausgleichszahnräder 14 und 16.

Wegen des erwähnten Winkels von 180° entfällt hier die Spreizung, diese wird sinngemäß vielmehr durch das antreibende Zahnrad 10 verursacht, welches im übrigen frei von den eigentlichen Antriebskräften bleibt. Da die Achsen 20, 22 der Ausgleichszahnräder 14, 16 am Wagen 62 fixiert sind und mit der Achse des Zahnrades 10 in einer Ebene liegen, ist ein Aneinanderdrücken der Laufscheiben durch die Stellschraube 56 ausgeschlossen.

Das Zahnrad 10 ist auf der Antriebsachse eines antreibenden Antriebsmotors fixiert, so daß hier auf die Laufscheiben 40, 42 am Zahnrad 10 verzichtet werden kann. Gleichwohl sind die Spielfreiheit als auch die Geometrieerhaltung für die Zahneingriffsstellen gesichert. Von Vorteil ist auch noch, daß die erreichten Zahnkräfte bei der Anordnung gemäß Fig. 6 ein Minimum besitzen.

Bei einer Kombination des Zahnradantriebes gemäß Fig. 6 in Verbindung mit der Abstiltzfläche 54 in Form einer Abstützschiene gemäß Fig. 1 ergibt sich eine ganz besonders vorteilhafte Bauweise.

## Ansprüche

1. Spielfreier Zahnradantrieb, bestehend aus einem antreibenden Zahnrad (10) und einem angetriebenen Zahnrad (12), dadurch gennzeichnet, daß wenigstens zwei Ausgleichszahnräder (14,16) vorgesehen sind, deren Achsen (20,22) gemeinsam mit der Achse (18) des antreibenden Zahnrades (10) eine Gruppierung (24) bilden, und daß die im Schnittpunkt (26) der Gruppierung (24) liegende Achse (18) mit einer in Richtung auf das angetriebene Zahnrad (12) weisenden Druckkraft (28) oder einer in Gegenrichtung weisenden Zugkraft beaufschlagt ist, wobei der Achsabstand zwischen den ineinander greifenden Zahnrädern (10,14;10;16) so konstant gehalten ist, daß an den jeweils belasteten Zahnflanken-paaren (66) der ineinandergreifenden Zahnräder das Zahnflankenspiel in gegenläufiger Richtung Null ist und an den jeweils unbelasteten Zahnflankenpaaren (68) ein Zahnflankenspiel zugelassen ist.

2. Zahnradantrieb nach Anspruch 1, dadurch gekennzeichnet, daß die Achsen der (20, 22) Ausgleichszahnräder (14, 26) mit der Achse (18) des antreibenden Zahnrades (10) eine zweischenklige Gruppierung (24) bilden, die scherenartig spreizbar ist.

3. Zahnradantrieb nach Anspruch 1 oder 2, dadurch gekennzeichnet, daß die Achse (18) des antreibenden Zahnrades (10) im Schnittpunkt (26) der zweischenkligen Gruppierung (24) liegt.

4. Zahnradantrieb nach Anspruch 1, dadurch gekennzeichnet, daß wenigstens ein Teil der ineinandergreifenden Zahnräder (10,14;10,16) mit ihren Achsen (18,20,22) in Lagerbügeln (34,36) gelagert ist.

5. Zahnradantrieb nach Anspruch 1 oder 4, dadurch gekennzeichnet, daß wenigstens ein Teil der ineinandergreifenden Zahnräder (10,14;10,16) zusätzliche Laufscheiben (38,40,42) aufweisen, die aufeinander abrollen.

6. Zahnradantrieb nach Anspruch 5, dadurch gekennzeichnet, daß die Laufscheiben (38,40,42) den gleichen Radius wie der Teilkreisradius der zugeordneten Zahnräder (10,14,16) aufweisen.

7. Zahnradantrieb nach Anspruch 5 oder 6, dadurch gekennzeichnet, daß die Laufscheiben (38,40,42) als Kugellager mit vorzugsweise balligem Außenring ausgebildet sind.

8. Zahnradantrieb nach einem oder mehreren der Ansprüche 1 bis 7, dadurch gekennzeichnet, daß das angetriebene Zahnrad (12) als Zahnstange (44) ausgebildet ist.

9. Zahnradantrieb nach Anspruch 8, dadurch gekennzeichnet, daß die Laufscheibe bei der Zahnstange (44) als Laufschiene (46) ausgebildet ist.

10. Zahnradantrieb nach Anspruch 8, dadurch gekennzeichnet, daß die Laufschiene (46) niveaugleich mit der Teilungsebene der Zahnstange (44) angeordnet ist.

11. Zahnradantrieb nach einem oder mehreren der Ansprüche 4 bis 10, dadurch gekennzeichnet, daß die Lagerbügel (34,36) ein gemeinsames Schwenkgelenk (48) besitzen, in dem auch die Achse (18) des antreibenden oder angetriebenen Zahnrades (10,12) endlichen Durchmessers gelagert ist, und daß an den Enden der Lagerbügel (34,36) die Achsen (18,20) der beiden Ausgleichszahnräder (14,16) gelagert sind.

12. Zahnradantrieb nach Anspruch 11, dadurch gekennzeichnet, daß die Lagerbügel (34,36) im gemeinsamen Schwenkgelenk (48) einen Winkel (50) einschließen, der entsprechend der gewünschten Vorspannkraft (28) verzahnungsbedingt frei gewählt werden kann.

13. Zahnradantrieb nach einem oder mehreren der Ansprüche 1 bis 12, dadurch gekennzeichnet, daß die Achse (18) des antreibenden Zahnrades (10) durch Federkraft oder Gravitationskraft mit Kraft (28) beaufschlagt ist.

14. Zahnradantrieb nach Anspruch 13, dadurch gekennzeichnet, daß die Federkraft mittels einer Einstellvorrichtung (52) einstellbar ausgebildet ist.

15. Zahnradantrieb nach Anspruch 13 oder 14, dadurch gekennzeichnet, daß eine auf der dem angetriebenen Zahnrad (10,12) abgewandten Seite des antreibenden Zahnrades (10) liegende Abstützlaufschiene (54) vorgesehen ist, gegen die sich vorzugsweise die Laufscheibe (38) des mittleren Zahnrades (10) abstützt bzw. darauf abrollt.

16. Zahnradantrieb nach einem der vorhergehenden Ansprüche 1 - 15, dadurch gekennzeichnet, daß die Achsen (20,22) der beiden Ausgleichszahnräder (14, 16) über eine Lagerung fest mit dem Wagen (62) verbunden sind, wodurch die Achsabstände der Achsen (18, 20, 22) aller Zahnräder (10, 12 ,14, 16) festgelegt sind.

Fig. 1

Fig. 4

Fig. 5

Fig.3

Fig.2

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁴) |
|---|---|---|---|
| X | DE - A - 2 406 076 <br> (L'ETAT FRANCAIS) <br> * Gesamt * | 1 | F 16 H 55/18 |
| A | | 1-16 | |
| A | US - A - 1 769 957 <br> (KROTEE) <br> * Fig. 2,4 * | 1-16 | |
| A | US - A - 2 397 777 <br> (COLMAN) <br> * Fig. 3 * | 1-16 | |
| D,A | DE - C2 - 2 910 373 <br> (HAMÜL) <br> * Gesamt * | 1 | |
| D,A | DE - A1 - 3 005 862 <br> (HAMÜL) <br> * Gesamt * <br> ---- | 1 | |

**RECHERCHIERTE SACHGEBIETE (Int Cl⁴)**

F 16 H 55/00
F 16 H 19/00

Der vorliegende Recherchenbericht wurde für alle Patentansprüche erstellt.

| Recherchenort <br> WIEN | Abschlußdatum der Recherche <br> 13-06-1990 | Prüfer <br> HEMMELMEIER |
|---|---|---|